# EUROPÄISCHE PATENTSCHRIFT

(11) **EP 3 829 912 B1**
(45) Veröffentlichungstag und Bekanntmachung des Hinweises auf die Patenterteilung: **01.01.2025**
(21) Anmeldenummer: 19752947.2
(22) Anmeldetag: 25.07.2019
(51) Int. Cl.: B60K 6/26, B60K 6/38, B60K 6/40, B60K 6/48, B60K 6/485, B60K 17/02

(54) **HYBRIDANTRIEBSVORRICHTUNG FÜR EIN KRAFTFAHRZEUG UND KRAFTFAHRZEUG**
HYBRID DRIVE DEVICE FOR A MOTOR VEHICLE, AND MOTOR VEHICLE
ARRANGEMENT DE PROPULSION HYBRIDE POUR UN VÉHICULE AUTOMOBILE ET VÉHICULE AUTOMOBILE

(30) Priorität: 01.08.2018 DE 102018118659
(43) Veröffentlichungstag der Anmeldung: 09.06.2021
(73) Patentinhaber: MAN Truck & Bus SE, 80995 München (DE)
(72) Erfinder: EBERLE, Andreas, 83358 Seebruck (DE)
(74) Vertreter: v. Bezold & Partner Patentanwälte - PartG mbB
(86) Internationale Anmeldenummer: PCT/EP2019/070088
(87) Internationale Veröffentlichungsnummer: WO 2020/025453

(56) Entgegenhaltungen:
- EP-A1- 2 514 620
- EP-A1- 3 098 106
- EP-A2- 1 122 110
- JP-A- H10 217 779
- US-A1- 2003 205 422

## Beschreibung

Die Erfindung betrifft eine Hybridantriebsvorrichtung für ein Kraftfahrzeug. Ferner betrifft die Erfindung ein Kraftfahrzeug, vorzugsweise einen Omnibus, mit einer entsprechenden Hybridantriebsvorrichtung.

Ist neben einem Verbrennungsmotor eine zusätzliche elektrische Maschine als Antrieb für ein Kraftfahrzeug vorgesehen, so muss neben den Hybrid-Komponenten, wie Inverter, Batterien etc., auch die elektrische Maschine im Antriebsstrang untergebracht werden. In der Praxis wird die elektrische Maschine dabei oftmals zwischen Verbrennungsmotor und Antriebsachse, vor oder nach dem Getriebe angeordnet. Diese Anordnung hat allerdings den Nachteil, dass der Antriebsstrang um die Länge der elektrischen Maschine verlängert wird und insbesondere in Omnibussen oft nicht mehr in den gewünschten hinteren Überhang einbaubar ist, da beispielsweise dann die Gelenkwelle zu kurz wird, um ihre Funktion ordnungsgemäß zu erfüllen.

Zur Lösung dieses Problems sind Stand der Technik auch Durchtriebsanordnungen bekannt, bei welchen die elektrische Maschine einer gegenüber zur Antriebswelle des Verbrennungsmotors liegenden Seite des Achsgehäuses angeordnet ist. Eine derartige Anordnung ist beispielsweise aus der DE 103 43 829 A1 bekannt. Nachteilig bei derartigen Durchtriebslösungen ist allerdings, dass durch die Kopplung des Verbrennungsmotors mit der elektrischen Maschine über die Achswelle ein Drehmomentfluss zwischen Verbrennungsmotor und elektrischer Maschine oftmals nur bei Bewegung, d. h. bei gleichzeitiger Rotation der Achswelle, möglich ist. Entsprechend kann die elektrische Maschine damit nicht als Anlasser zum Starten des Verbrennungsmotors dienen, bzw. der Verbrennungsmotor kann nicht bei Fahrzeugstillstand zum Laden der Energiespeicher über die generatorisch betriebene elektrische Maschine verwendet werden.

Weiterhin offenbart die US 2003/0205422 A1 ein Fahrzeug mit einer Antriebsmaschine, einem mechanisch mit der Antriebsmaschine gekoppelten Generator, einer ersten Antriebseinheit mit mehreren Eingängen, die mindestens einen ersten und einen zweiten Dreheingang und mindestens einen Drehausgang aufweist. Der erste Dreheingang ist dabei mit der Antriebsmaschine, einem ersten Elektromotor, der mechanisch mit dem zweiten Dreheingang und elektrisch mit dem Generator gekoppelt ist, und einem ersten Paar von Fahrzeugantriebsrädern, die mit dem Drehausgang gekoppelt sind.

Aus der EP 2 514 620 A1 ist in diesem Zusammenhang ferner ein schaltbarer Antriebsmechanismus für Nebenaggregate eines Hybridfahrzeug bekannt, der in der Lage ist, Nebenaggregate unabhängig vom Fahrzustand des Fahrzeugs zu betreiben. Der Antriebsmechanismus umfasst dabei einen mit einem Nebenaggregat verbundenen Abtriebsmechanismus zur Entnahme von Leistung aus einem Fahrantriebssystem. Zwischen dem Abtriebsmechanismus und dem Nebenaggregat ist eine erste Freilaufkupplung angeordnet, die die Leistung nur auf die Seite des Nebenaggregats übertragen kann. Weiterhin ist das Nebenaggregat mit einem Nebenaggregatsantriebsmotor verbunden, wobei sich der Nebenaggregatsantriebsmotor auf der dem Abtriebsmechanismus gegenüberliegenden Seite des Nebenaggregat befindet. Eine zweite Freilaufkupplung, die die Leistung nur auf die Seite des Nebenaggregats übertragen kann, ist zwischen dem Nebenaggregat und dem Nebenaggregatsantriebsmotor angeordnet. Ferner offenbart die EP 1 122 110 A2 Kraftübertragungsvorrichtung eines Kraftfahrzeugs. Die Kraftübertragungsvorrichtung umfasst dabei einen Verbrennungsmotor, eine Getriebeschaltvorrichtung, eine elektrische Drehmaschine, auf die eine Leistung über die Getriebeschaltvorrichtung übertragen wird, und eine Kupplung, die zwischen einer Eingangswelle und einer Ausgangswelle der Getriebeschaltvorrichtung vorgesehen ist und ein Übertragungsdrehmoment zwischen der Eingangswelle und der Ausgangswelle einstellt, wodurch ein Geschwindigkeitswechselstoß mechanisch reduziert werden kann. Weiterhin offenbart die JP H10 217779A einen Verbrennungsmotor, dessen Kurbelwelle über eine Kupplung mit einem Schaltgetriebe verbunden ist. Die entsprechenden Komponenten befinden sich direkt am bzw. angrenzend zum Verbrennungsmotor und werden von einem mit dem Verbrennungsmotor verbundenen Gehäuse umhaust. Das Gehäuse umfasst ferner ein Differentialgehäuse mit einem Differential und einen Erweiterungsabschnitt mit einem Elektromotor.

Es ist daher eine Aufgabe eine im Vergleich zum Stand der Technik verbesserten Antriebsanordnung für ein hybridisiertes Kraftfahrzeug bereitzustellen, mit dem diese Nachteile vermieden werden. Es ist insbesondere eine Aufgabe der Erfindung eine Vorrichtung zum einfachen Umrüsten eines rein verbrennungsmotorisch angetriebenen Antriebsstrangs auf einen hybridisierten Antrieb bereitzustellen, die zudem eine flexible Steuerung der Drehmomentflüsse zwischen Verbrennungsmotor, elektrischer Maschine und angetriebener Achswelle erlaubt.

Diese Aufgaben werden erfindungsgemäß durch eine Hybridantriebsvorrichtung für ein Kraftfahrzeug und ein Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Hybridantriebsvorrichtung für ein Kraftfahrzeug, vorzugsweise für einen Omnibus umfasst - in an sich bekannter Weise - ein Achsgehäuse mit einem ersten und zweiten Antriebsanschluss. Die Antriebsanschlüsse können dabei beispielsweise als Anschlussflansche ausgebildet sein. Ferner umfasst die Antriebsvorrichtung einen Verbrennungsmotor, vorzugsweise einen Dieselmotor, der mit dem ersten Antriebsanschluss verbindbar ist, und eine elektrische Maschine, vorzugsweise eine elektromotorisch und generatorisch betreibbare elektrische Maschine, die mit dem zweiten Antriebsanschluss verbindbar ist. Die elektrische Maschine kann dabei ferner - in an sich bekannter Weise - mit einem Energiespeicher und/oder einem Inverter in Verbindung stehen. Darüber hinaus umfasst die Hybridantriebsvorrichtung - in herkömmlicher Weise - ein im Achsgehäuse angeordnetes Differenzial, beispielsweise in Form eines Planetengetriebes, das mit zwei Achswellen verbunden ist. Die zwei Achswellen können hierbei jeweils relativ zum Achsgehäuse drehbar gelagert sein und an ihrem fahrzeugäußeren Ende jeweils mit einem Rad des Kraftfahrzeugs verbunden sein.

Erfindungsgemäß umfasst die Hybridantriebsvorrichtung eine im Achsgehäuse angeordnete Drehmoment-Übertragungseinrichtung, beispielsweise in Form eines Verteilergetriebes, welche eine Kupplung umfasst. Die Drehmoment-Übertragungseinrichtung wird dabei nachfolgend als *"erste"* Drehmoment-Übertragungseinrichtung bezeichnet, zur besseren Unterscheidung von einer nachfolgend noch eingehender beschriebenen zweiten Drehmoment-Übertragungseinrichtung. In analoger Weise wird auch die Kupplung nachfolgend als *"erste"* Kupplung bezeichnet. Die erste Drehmoment-Übertragungseinrichtung kann dabei dazu dienen einen Drehmomentfluss zwischen verschiedenen Komponenten aufzuteilen und/oder dessen Richtung zu ändern, wobei der Ausdruck "*im Achsgehäuse angeordnet"* dabei so verstanden werden kann, dass die entsprechende Einrichtung zumindest abschnittsweise vom Achsgehäuse umgeben wird.

Die erste Drehmoment-Übertragungseinrichtung ist zudem ausgebildet, in einem ersten Betriebsmodus M, Drehmoment zwischen dem ersten und/oder zweiten Antriebsanschluss und dem Differenzial zu übertragen und in einem zweiten Betriebsmodus M₂ Drehmoment zwischen dem ersten und zweiten Antriebsanschluss unter Umgehung des Differenzials zu übertragen. Mit anderen Worten kann somit im ersten Betriebsmodus M₁ ein paralleler Antrieb der Achswelle durch den Verbrennungsmotor und die elektrische Maschine erfolgen, während im zweiten Betriebsmodus M₂ auch bei Fahrzeugstillstand Drehmoment zwischen dem Verbrennungsmotor und der elektrischen Maschine übertragen werden kann. Letzteres ermöglicht auf vorteilhafte Weise beispielsweise die elektrische Maschine in Funktion eines Anlassers zu nutzen, um damit den Verbrennungsmotor bei Fahrzeugstillstand zu starten, oder einen Energiespeicher des Fahrzeugs bei Fahrzeugstillstand über die durch den Verbrennungsmotor angetriebene elektrische Maschine zu laden. Wie aus den vorherigen Beispielen ersichtlich, kann der Ausdruck *"übertragen"* dabei sowohl bedeuten, dass Drehmoment vom ersten zum zweiten Antriebsanschluss oder umgekehrt überführt wird. Analoges gilt auch für das "*Übertragen"* von Drehmoment zwischen dem ersten und/oder zweiten Antriebsanschluss und dem Differenzial. So kann im ersten Betriebsmodus M, beispielsweise Drehmoment sowohl vom Verbrennungsmotor an das Differenzial übertragen werden, wie auch - speziell im Schubbetrieb - Drehmoment vom Differenzial an den Verbrennungsmotor übertragen werden.

Gemäß einem ersten Aspekt der Erfindung kann ein Wechsel zwischen dem ersten und zweiten Betriebsmodus M₁, M₂ durch ein Überführen der ersten Kupplung von einem geschlossenen in einen offenen Zustand oder umgekehrt erzeugbar sein. Mit anderen Worten kann die Betätigung der ersten Kupplung unmittelbar ursächlich für eine Änderung des Betriebsmodus sein. Beispielsweise kann dabei durch ein Schließen der ersten Kupplung der erste Betriebsmodus M, und durch ein Öffnen der ersten Kupplung der zweite Betriebsmodus M₂ eingenommen werden. Dies ermöglicht auf vorteilhafte Weise einen zuverlässigen und einfach zu realisierenden Wechsel des Betriebsmodus der Hybridantriebsvorrichtung.

Nach einem weiteren Aspekt der Erfindung kann die erste Drehmoment-Übertragungseinrichtung in Form eines Verteilergetriebes aus zwei oder mehr miteinander gepaarten Zahnrädern ausgebildet sein. Dies ermöglicht auf vorteilhafte Weise eine Übertragung und/oder Aufteilung des Drehmomentflusses zwischen dem ersten und zweiten Antriebsanschluss und dem Differenzial mit wenigen Bauteilen und damit kostengünstig zu realisieren. Zudem oder alternativ kann erste Drehmoment-Übertragungseinrichtung auch einen Kettentrieb umfassen. Ferner kann die erste Kupplung der ersten Drehmoment-Übertragungseinrichtung als Klauenkupplung ausgebildet sein. Jedoch können auch andere Kupplungsformen, darunter Reibkupplungen, Zahnkupplungen, Federstegkupplungen, Gummikupplungen, verwendet werden, ohne den Bereich der Erfindung zu verlassen. In allen Fällen wird damit auf vorteilhafte Weise ein zuverlässiges Unterbrechen des Drehmomentflusses erreicht. Ferner kann die Drehmoment-Übertragungseinrichtung ein oder mehrere Synchronisationseinrichtungen, beispielsweise in Form von Synchronringen mit einer Sperrverzahnung und Schaltmuffen, umfassen, um die Drehzahlen der jeweils an den Kupplungen angeschlossenen Wellen, Durchtriebe und/oder Zahnräder zu synchronisieren. Vorzugsweise kann auch eine elektrische Synchronisierung über die elektrische Maschine erfolgen, wobei die Hybridantriebsvorrichtung hierzu zusätzlich entsprechende Sensoren umfassen kann.

Gemäß einem weiteren Aspekt kann der erste und zweite Antriebsanschluss im Achsgehäuse über einen Durchtrieb in Antriebsverbindung stehen, wobei der Durchtrieb mittels der ersten Kupplung an die erste Drehmoment-Übertragungseinrichtung koppelbar ist. Dies ermöglicht auf vorteilhafte Weise einen möglichst verlustfreien Drehmomentübertrag im zweiten Betriebsmodus M₂. Alternativ kann der erste und zweite Antriebsanschluss im Achsgehäuse auch über die erste Drehmoment-Übertragungseinrichtung in Antriebsverbindung stehen, wobei die erste Drehmoment-Übertragungseinrichtung mittels der ersten Kupplung an das Differenzial koppelbar ist. Dadurch lässt sich auf vorteilhafte Weise ein Versatz zwischen dem ersten und zweiten Antriebsanschluss realisieren, was wiederum eine flexiblere Montage aller Komponenten der Hybridantriebsvorrichtung ermöglicht.

Nach einem weiteren Aspekt kann die erste Drehmoment-Übertragungseinrichtung eine weitere Kupplung, nachfolgend als *"zweite"* Kupplung bezeichnet, umfassen, durch die der erste oder zweite Antriebsanschluss im ersten Betriebsmodus M₁ vom jeweils anderen Antriebsanschluss entkoppelbar ist. Mit anderen Worten kann damit im ersten Betriebsmodus M₁ das Differenzial beispielsweise nur vom Verbrennungsmotor oder nur von der elektrischen Maschine angetrieben werden, während die entsprechenden Bauteile des jeweils anderen Antriebs vom Antriebsstrang entkoppelt werden. Vorzugsweise erfolgt dies durch ein Überführen der zweiten Kupplung von einem geschlossenen in einen offenen Zustand oder umgekehrt. D. h., die Betätigung der zweiten Kupplung kann unmittelbar ursächlich für die Entkopplung sein. Der Vorteil dieses Aspekts der Erfindung liegt dabei darin, dass Energie eingespart werden kann, da durch die Entkopplung der beiden Antriebsanschlüsse weniger Masse bewegt bzw. angetrieben werden muss. In diesem Zusammenhang ist es für den Fachmann auch ersichtlich, dass die Drehmoment-Übertragungseinrichtung vorzugsweise noch weitere, d. h. mehr als zwei Kupplungen umfassen kann, ohne den Bereich der Erfindung zu verlassen.

Ferner kann gemäß einem weiteren Aspekt die Hybridantriebsvorrichtung eine erste Hilfsaggregatbaugruppe umfassen, die mindestens ein Hilfsaggregat, vorzugsweise einen Luftpresser und/oder einen Klimakompressor, umfasst. Das mindestens eine Hilfsaggregat kann allerdings auch eine weitere elektrische Maschine, eine Hydraulikpumpe, eine Lenkhilfepumpe, und/oder eine Kühlwasserpumpe sein. Die erste Hilfsaggregatbaugruppe kann außerhalb des Achsgehäuses angeordnet sein und mit einem dritten Antriebsanschluss des Achsgehäuses, vorzugsweise über eine starre Welle, eine Gelenkwelle und/oder eine Kardanwelle, verbindbar sein. Alternativ kann die Hilfsaggregatbaugruppe allerdings auch im Achsgehäuse angeordnet sein und, vorzugsweise direkt, mit der ersten Drehmoment-Übertragungseichrichtung verbindbar sein. In beiden Fällen ermöglicht die Tatsache, dass die erste Hilfsaggregatbaugruppe vom Verbrennungsmotor, dem Differenzial und/oder der elektrischen Maschine angetrieben werden kann, auf vorteilhafte Weise eine höhere Flexibilität im Antrieb der Hilfsaggregatbaugruppe, wodurch Energie eingespart werden kann.

Gemäß einer Weiterbildung dieses Aspekts kann die erste Drehmoment-Übertragungseinrichtung ferner ausgebildet sein, im ersten Betriebsmodus M, Drehmoment zwischen dem dritten Antriebsanschluss und dem Differenzial zu übertragen und in dem zweiten Betriebsmodus M₂ Drehmoment zwischen dem ersten, zweiten und dritten Antriebsanschluss unter Umgehung des Differenzials zu übertragen. Dies ermöglicht dabei auf vorteilhafte Weise, dass auch bei Fahrzeugstillstand und/oder abgeschaltetem Verbrennungsmotor die Hilfsaggregate weiterhin über die elektrische Maschine betrieben werden können. Vorzugsweise kann dabei der Wechsel zwischen dem ersten und zweiten Betriebsmodus M₁, M₂ durch ein Überführen der ersten Kupplung von einem geschlossenen in einen offenen Zustand oder umgekehrt erzeugbar sein. Mit anderen Worten kann die Betätigung der ersten Kupplung unmittelbar ursächlich für eine Änderung des Betriebsmodus sein.

Gemäß einer zusätzlichen oder alternativen Weiterbildung dieses Aspekts kann die erste Hilfsaggregatbaugruppe zwei Hilfsaggregate, vorzugsweise einen Luftpresser und einen Klimakompressor, und/oder eine zweite Drehmoment-Übertragungseichrichtung zur antriebsmäßigen Kopplung der zwei Hilfsaggregate und/oder zwei Trennkupplungen, die jeweils zur wahlweisen Unterbrechung des Drehmomentflusses zwischen der zweiten Drehmoment-Übertragungseichrichtung und dem jeweiligen Hilfsaggregat angeordnet sind, umfassen. Die Gruppierung und/oder Verbindung dieser Bauteile ermöglicht dabei auf vorteilhafte Weise eine kostengünstige und bauraumsparende Anordnung der Hilfsaggregate.

Nach einem weiteren Aspekt der Erfindung kann die Hybridantriebsvorrichtung eine zweite Hilfsaggregatbaugruppe umfassen, die mindestens ein Hilfsaggregat, vorzugsweise einen Luftpresser und/oder einen Klimakompressor, umfasst. Die Hybridantriebsvorrichtung kann somit sowohl eine erste als auch eine zweite Hilfsaggregatbaugruppe umfassen. Dabei kann die zweite Hilfsaggregatbaugruppe zusammen mit der elektrischen Maschine außerhalb des Achsgehäuses angeordnet sein und/oder mit dem zweiten Antriebsanschluss verbindbar sein. Diese Kombination der zweiten Hilfsaggregatbaugruppe und der elektrischen Maschine zu einer Baueinheit ermöglicht dabei, auf vorteilhafte Weise Bauraum zu sparen.

Gemäß einer Weiterbildung dieses Aspekts kann die zweite Hilfsaggregatbaugruppe dabei zwei Hilfsaggregate, vorzugsweise ein Luftpresser und ein Klimakompressor und/oder eine dritte Drehmoment-Übertragungseichrichtung zur antriebsmäßigen Kopplung der zwei Hilfsaggregate und der elektrischen Maschine und/oder drei Trennkupplungen, die jeweils zur wahlweisen Unterbrechung des Drehmomentflusses zwischen der dritten Drehmoment-Übertragungseichrichtung und dem jeweiligen Hilfsaggregat und der elektrischen Maschine angeordnet sind, umfassen.

Gemäß einer zusätzlichen oder alternativen Weiterbildung kann die zweite Hilfsaggregatbaugruppe und die elektrische Maschine von einem gemeinsamen Gehäuse umhaust werden. Mit anderen Worten kann ein gemeinsames Gehäuse sowohl die zweite Hilfsaggregatbaugruppe als auch die elektrische Maschine zumindest abschnittsweise umgeben. Dies ermöglicht auf vorteilhafte Weise einen Schutz der entsprechenden Bauteile vor Schmutz und Feuchtigkeit und erleichtert gleichzeitig deren Montage.

Gemäß einer zusätzlichen oder alternativen Weiterbildung kann der elektrischen Maschine ein Übersetzungsgetriebe mit mindestens einer Übersetzungsstufe vorgeschaltet sein. Anders ausgedrückt kann zwischen der elektrischen Maschine und dem zweiten Antriebsanschluss ein Übersetzungsgetriebe angeordnet sein, dass eingerichtet ist, einen bestimmten Betrag an Unter- und/oder Übersetzung zwischen der elektrischen Maschine und dem zweiten Antriebsanschluss bereitzustellen. Beispielsweise kann das Übersetzungsgetriebe hierzu Wellen-, Zahn- und/oder Reibräder umfassen. Auf vorteilhafte Weise kann so mittels des Übersetzungsgetriebes die Drehzahl oder das Drehmoment je nach Anforderung variiert werden.

Nach einem weiteren Aspekt der Erfindung kann die elektrische Maschine auf einer gegenüberliegenden Seite des Achsgehäuses wie der Verbrennungsmotor angeordnet sein. Zudem oder alternativ kann die elektrische Maschine in normaler Vorwärts-Fahrtrichtung vor dem Achsgehäuse und der Verbrennungsmotor hinter dem Achsgehäuse angeordnet sein. Beide Fälle ermöglichen gerade bei der Verwendung der Hybridantriebsvorrichtung in einem Omnibus eine Hybridisierung des Antriebsstrangs, ohne das hierbei Änderungen am hinteren Überhang vorgenommen werden müssen.

Gemäß einem weiteren Aspekt der Erfindung kann der Verbrennungsmotor mit dem ersten Antriebsanschluss über eine erste Antriebsverbindung verbindbar sein, wobei die erste Antriebsverbindung eine starre Welle, eine Gelenkwelle, eine Kardanwelle, und/oder eine vierte Trennkupplung, vorzugsweise eine Reibkupplung, umfassen kann. Erfindungsgemäß ist der Elektromotor mit dem zweiten Antriebsanschluss über eine zweite Antriebsverbindung verbindbar, wobei die zweite Antriebsverbindung eine starre Welle, eine Gelenkwelle, eine Kardanwelle und/oder eine fünfte Trennkupplung, vorzugsweise eine Reibkupplung, umfassen kann. In beiden Fällen wird dadurch eine kostengünstige und einfach zu realisierende Möglichkeit einer Antriebsverbindung bereitgestellt.

Ferner betrifft die Erfindung auch ein Kraftfahrzeug, vorzugsweise einen Omnibus, umfassend eine Hybridantriebsvorrichtung, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1:: eine Hybridantriebsvorrichtung gemäß einer ersten Ausführungsform der Erfindung;
- Figur 2:: eine Hybridantriebsvorrichtung gemäß einer zweiten Ausführungsform der Erfindung;
- Figur 3: eine Hybridantriebsvorrichtung gemäß einer dritten Ausführungsform der Erfindung;
- Figur 4: eine stark schematische Übersicht der wesentlichen Ausführungsformen der Erfindung;
- Figur 5: Kraftfahrzeug mit einer Hybridantriebsvorrichtung gemäß einer Ausführungsform der Erfindung.

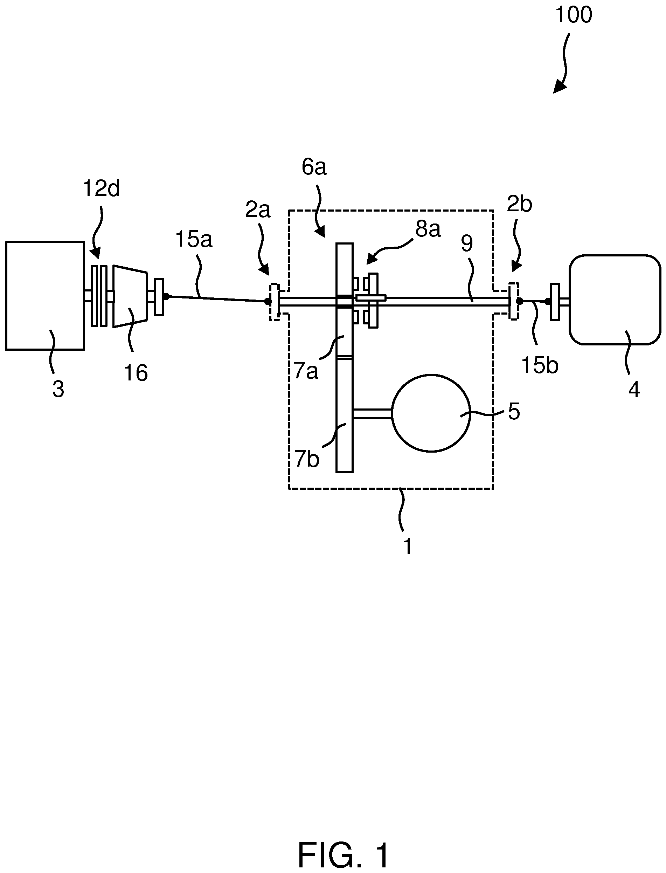

Figur 1 zeigt eine Hybridantriebsvorrichtung 100 gemäß einer ersten Ausführungsform der Erfindung. Dabei umfasst die Hybridantriebsvorrichtung 100 ein Achsgehäuse 1 mit einem ersten Antriebsanschluss 2a und einen zweiten Antriebsanschluss 2b, die vorliegend als Gelenkwellenanschlussflansche ausgebildet sind. Der erste Antriebsanschluss 2a ist über eine als Gelenkwelle ausgeführte erste Antriebsverbindung 15a mit einem Verbrennungsmotor 3 verbunden, wobei zwischen der Gelenkwelle und dem Verbrennungsmotor 3 zusätzlich eine - als vierte Trennkupplung 12d bezeichnete - Trennkupplung, vorzugsweise eine Reibkupplung, und ein Getriebe 16, vorzugsweise ein Schaltgetriebe, angeordnet sind. Der zweite Antriebsanschluss 2b, der auf einer dem ersten Antriebsanschluss 2a gegenüberliegenden Seite des Achsgehäuses 1 angeordnet ist, ist über eine als Gelenkwelle ausgeführte zweite Antriebsverbindung 15b mit einer elektrischen Maschine 4 verbunden, wobei die elektrische Maschine 4 sowohl elektromotorisch als auch generatorisch betreibbar sein kann. Die elektrische Maschine 4 kann ferner - in an sich bekannterWeise - mit einem Energiespeicher und/oder einem Inverter in Verbindung stehen (nicht dargestellt).

Innerhalb des Achsgehäuses 1 der Hybridantriebsvorrichtung 100 ist der erste Antriebsanschluss 2a mit dem zweiten Antriebsanschluss 2b über einen Durchtrieb 9 verbunden, wodurch ein direktes Übertragen von Drehmoment vom Verbrennungsmotor 3 zur elektrischen Maschine 4 und umgekehrt ermöglicht wird. Um Drehmoment auch zu den Antriebsrädern, die über eine jeweilige Achswelle (nicht dargestellt) mit dem Differenzial 5 verbunden sind, zu übertragen, ist ferner eine erste Drehmoment-Übertragungseinrichtung 6a innerhalb des Achsgehäuses 1 angeordnet. Vorliegend ist diese in Form zweier in Wirkverbindung stehender Zahnräder 7a, 7b ausgebildet. Das erste Zahnrad 7a ist dabei drehbar zum Durchtrieb 9 gelagert und kann durch Schließen einer ersten Kupplung 8a - die vorliegend als Klauenkupplung ausgebildet - an den Durchtrieb 9 gekoppelt werden. Dazu ist die Klauenkupplung axial verschiebbar entlang des Durchtriebs 9 gelagert und kann dadurch in einer Schließstellung einen lösbaren Formschluss mit dem ersten Zahnrad 7a eingehen. Das Schließen der ersten Kupplung 8a ermöglicht dabei, dass Drehmoment in einem ersten Betriebsmodus M, vom ersten und/oder zweiten Antriebsanschluss 2a, 2b über den Durchtrieb 9 sowie das erste und zweite Zahnrad 7a, 7b letztendlich zum Differenzial 5 übertragen wird, wobei das Differenzial 5 über eine starre Welle fest mit dem zweiten Zahnrad 7b verbunden ist. Durch Öffnen der ersten Kupplung 8a kann zudem in einem zweiten Betriebsmodus M₂ Drehmoment zwischen dem ersten und zweiten Antriebsanschluss 2a, 2b unter Umgehung des Differenzials 5 übertragen werden. Entsprechend ermöglicht die Hybridantriebsvorrichtung 100 - auf vorteilhafte Weise - ein flexibles Steuern der Drehmomentflüsse im Antriebsstrang, da das Differenzial 5 beispielsweise nur mit der elektrischen Maschine 4 (erste Kupplung 8a geschlossen, vierte Trennkupplung 12d geöffnet), oder sowohl mit der elektrischen Maschine 4 und dem Verbrennungsmotor 3 (erste Kupplung 8a geschlossen, vierte Trennkupplung 12d geschlossen) verbunden werden kann, oder aber Drehmoment zwischen dem ersten und zweiten Antriebsanschluss 2a,2b unter Umgehung des Differenzials 5 (erste Kupplung 8a geöffnet, vierte Trennkupplung 12d geschlossen) übertragen werden.

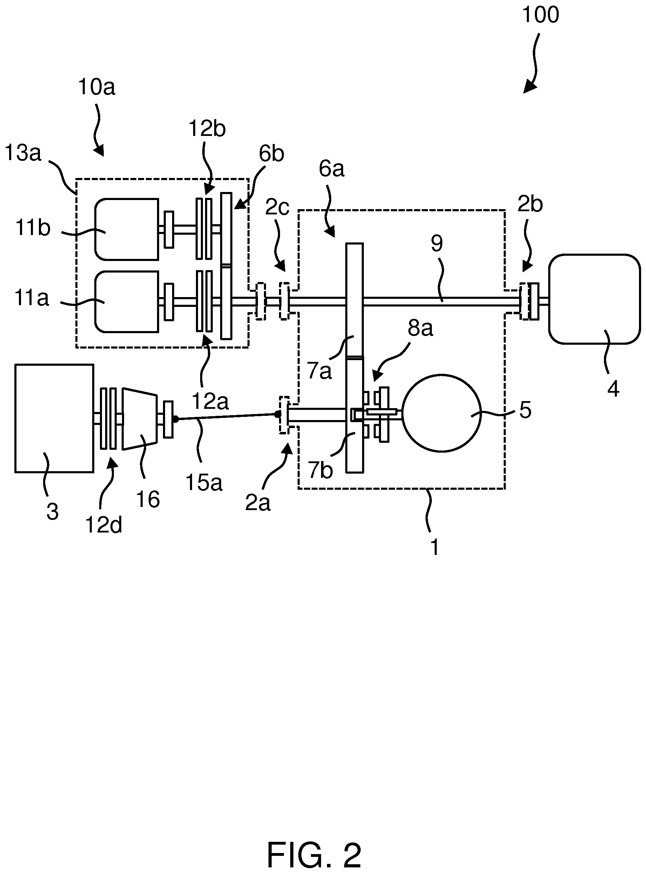

Figur 2 zeigt eine Hybridantriebsvorrichtung 100 gemäß einer zweiten Ausführungsform der Erfindung. Im Gegensatz zu der in Figur 1 gezeigten Ausführungsform umfasst das Achsgehäuse 1 in Figur 2 drei Antriebsanschlüsse 2a, 2b, 2c. Der erste Antriebsanschluss 2a in Form eines Gelenkwellenanschlussflansches ist dabei - analog zu Figur 1 - über eine als Gelenkwelle ausgeführte erste Antriebsverbindung 15a mit einem Verbrennungsmotor 3 verbunden. Der zweite Antriebsanschluss 2b - in Form eines Wellenanschlussflansches - ist mit einer elektrischen Maschine 4 verbunden und der dritte Antriebsanschluss 2c - ebenfalls in Form eines Wellenanschlussflansches - steht mit einer ersten Hilfsaggregatbaugruppe 10a in Verbindung. Die erste Hilfsaggregatbaugruppe 10a ist dabei außerhalb des Achsgehäuses 1 angeordnet und wird von einem separaten Gehäuse, das vorliegend als Hilfsaggregatgehäuse 13a bezeichnet wird, umhaust. Die erste Hilfsaggregatbaugruppe 10a umfasst ferner ein erstes Hilfsaggregat 11a, das über eine starre Welle mit dem dritten Antriebsanschluss 2c verbunden ist, wobei das erste Hilfsaggregat 11a über eine erste Trennkupplung 12a, vorzugsweise eine Reibkupplung, vom dritten Antriebsanschluss getrennt werden kann. Ferner umfasst erste Hilfsaggregatbaugruppe 10a ein zweites Hilfsaggregat 11b, das über eine starre Welle und eine zweite Drehmoment-Übertragungseinrichtung 6b - in Form zweier gepaarter Zahnrädern - mit dem dritten Antriebsanschluss 2c verbunden ist, wobei das zweite Hilfsaggregat 11b ebenfalls über eine zweite Trennkupplung 12b, vorzugsweise eine Reibkupplung, vom dritten Antriebsanschluss 2c getrennt werden kann. Durch Öffnen bzw. Schließen der jeweils ersten und/oder zweiten Trennkupplung 12a, 12b ist es somit möglich, nur das erste, nur das zweite, oder das erste und das zweite Hilfsaggregat 11a, 11b an den dritten Antriebsanschluss 2c zu verbinden.

Um Drehmoment zwischen dem Verbrennungsmotor 3, der elektrischen Maschine 4 und dem ersten und/oder zweiten Hilfsaggregat 11a, 11b zu verteilen und um Drehmoment von diesen Bauteilen ans Differenzial 5 oder umgekehrt zu übertragen, ist innerhalb des Achsgehäuses 1 wiederum eine erste Drehmoment-Übertragungseinrichtung 6a vorhanden. Diese entspricht dabei im Wesentlichen der in Figur 1 gezeigten Ausführung in Form zweier gepaarter Zahnrädern 7a, 7b und einer ersten Kupplung 8a, die als Klauenkupplung ausgeführt ist. Alternativ könnte allerdings auch ein Riemen- und/oder Kettentrieb zur Drehmomentübertragung verwendet werden, ohne den Bereich der Erfindung zu verlassen. Bei der vorliegenden Ausführungsform ist das erste Zahnrad 7a fest mit einem Durchtrieb 9, der innerhalb des Achsgehäuses 1 den zweiten mit dem dritten Drehmomentanschluss 2b, 2c verbindet, verbunden. Das zweite Zahnrad 7b, das in Wirkverbindung mit dem ersten Zahnrad 7a steht, ist hierzu einerseits über eine, fest mit dem zweiten Zahnrad 7b verbundene starre Welle mit dem ersten Antriebsanschluss 2a verbunden und kann zudem mittels der ersten Kupplung 8a an eine mit dem Differenzial 5 verbundene starre Welle gekoppelt werden. Letztere ist hierbei an ihrem nicht mit dem Differenzial 5 verbundenen Ende drehbar im zweiten Zahnrad 7b gelagert.

Im Folgenden soll nun auch für diese Ausführungsform kurz auf die verschiedenen Möglichkeiten der Kopplung bzw. die verschiedenen Betriebsmodi eingegangen werden. Ist die erste Kupplung 8a im Achsgehäuse geschlossen, so kann grundsätzlich in einem ersten Betriebsmodus M, Drehmoment vom Verbrennungsmotor 3, der elektrischen Maschine 4, dem ersten und oder zweiten Hilfsaggregat 11a, 11b zum Differenzial 5 oder umgekehrt übertragen werden. Durch Öffnen der ersten Kupplung 8b kann dann in einem zweiten Betriebsmodus M₂ Drehmoment zwischen dem Verbrennungsmotor 3, der elektrischen Maschine 4, dem ersten und zweiten Hilfsaggregat 11a, 11b unter Umgehung des Differenzials übertragen werden. Entsprechend kann auch bei Fahrzeugstillstand beispielsweise ein Starten des Verbrennungsmotors 3 über die elektrische Maschine 4 oder ein Antrieb der beiden Hilfsaggregate 11a, 11b über die elektrische Maschine 4 erfolgen. Mittels der weiteren Trennkupplungen 12a, 12b, 12d können dabei sowohl im ersten als auch zweiten Betriebsmodus M₁, M₂ verschiedene Komponenten vom Drehmomentfluss ausgenommen werden, um so die Anzahl an bewegten Teilen und damit den Energieverbrauch des Kraftfahrzeugs zu reduzieren.

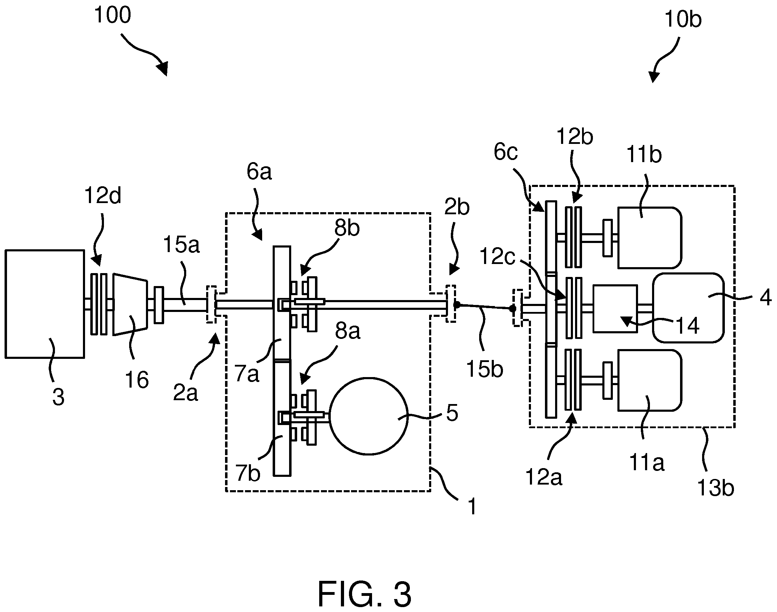

Figur 3 zeigt eine Hybridantriebsvorrichtung 100 gemäß einer dritten Ausführungsform der Erfindung, bei der die erste Drehmoment-Übertragungseinrichtung 6a zwei Kupplungen, vorliegend als erste und zweite Kupplung 8a, 8b bezeichnet, umfasst. Im Gegensatz zu den vorherigen Ausführungsformen wird dadurch ein noch flexibleres Steuern der Drehmomentflüsse erreicht. Hierzu ist die Verbindung innerhalb zwischen dem ersten und zweiten Antriebsanschluss 2a, 2b des Achsgehäuses 1 nicht wie bislang als starrer Durchtrieb 9 ausgeführt. Vielmehr ist der erste Antriebsanschluss 2a über eine starre Welle fest mit dem ersten Zahnrad 7a verbunden, während an den zweiten Antriebsanschluss 2b eine starre Welle, die drehbar im ersten Zahnrad 7a gelagert ist, angeschlossen ist. Diese kann mittels der zweiten Kupplung 8b an das erste Zahnrad 7a gekoppelt werden, welches wiederum in Wirkverbindung mit dem zweiten Zahnrad 7b steht. Drehbewegung des zweiten Zahnrads 7b kann dann wiederum über eine als Klauenkupplung ausgebildete erste Kupplung 8a an eine starre Welle übertragen werden, wobei die starre Welle an ihrem einen Ende drehbar zweiten Zahnrad 7b gelagert ist und an ihrem anderen Ende mit dem Differenzial 5 verbunden ist.

Eine weitere Besonderheit der in Figur 3 dargestellten Ausführungsform ist die mit dem zweiten Antriebsanschluss 2b verbundene zweite Hilfsaggregatbaugruppe 10b , die zusammen mit der elektrischen Maschine 4 in einem gemeinsamen Gehäuse 13b angeordnet ist. Zur Kopplung mit dem Achsgehäuse 1 ist dabei ein Antriebsanschluss des gemeinsamen Gehäuses 13b über eine als Gelenkwelle ausgebildete zweite Antriebsverbindung 15b mit dem zweiten Antriebsanschluss 2b des Achsgehäuses verbunden. Innerhalb des gemeinsamen Gehäuses 13b steht die elektrische Maschine 4 mit dem Antriebsanschluss des gemeinsamen Gehäuses 13b über eine starre Welle in Verbindung, wobei zwischen dem Antriebsanschluss und der elektrischen Maschine zusätzlich noch eine als dritte Trennkupplung 12c bezeichnete Trennkupplung, vorzugsweise eine Reibkupplung, und ein Übersetzungsgetriebe 14 angeordnet sind. Ferner steht die starre Welle innerhalb des gemeinsamen Gehäuses 13b über eine dritte Drehmoment-Übertragungseinrichtung 6c in Form dreier zueinander in Verbindung stehende Zahnräder mit einem ersten Hilfsaggregat 11a und einem zweiten Hilfsaggregat 11b in Verbindung. Dabei können sowohl das erste als auch das zweite Hilfsaggregat jeweils über eine erste bzw. zweite Trennkupplung 12a, 12b, wiederum vorzugsweise Reibkupplungen, von der dritten Drehmoment-Übertragungseinrichtung 6c getrennt werden.

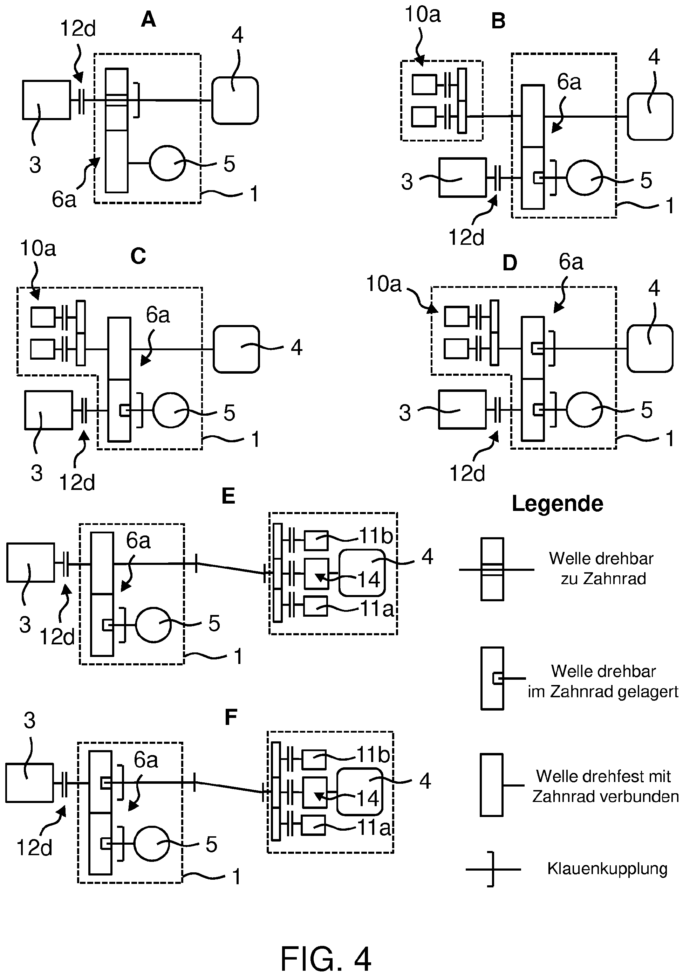

Figur 4 zeigt in einer stark schematisierten Darstellung eine Übersicht der wesentlichen Ausführungsformen A-F der Erfindung. Dabei werden in allen Ausführungsformen selbe Bauteile mit denselben Zeichen dargestellt. Insbesondere sei hierbei im Fall der Drehmoment-Übertragungseinrichtungen auf die in Figur 4 rechts unten gezeigte Legende verwiesen, in der die auftretenden Welle/Zahnradverbindungen beschrieben werden. Ausführungsform A und B entsprechen dabei im Wesentlichen den im Detail in Figur 1 und 2 dargestellten Ausführungsformen, wobei auf die Darstellung des Getriebes 16, der Antriebsanschlüsse 2a, 2b, 2c sowie der Gelenkwellen verzichtet wurde. Ausführungsform C stellt eine Variation der Ausführungsform B dar, bei der die erste Hilfsaggregatbaugruppe 10a nicht in einem separaten Hilfsaggregatgehäuse 13a außerhalb des Achsgehäuses 1, sondern im Achsgehäuse 1 angeordnet ist und damit zumindest abschnittsweise vom Achsgehäuse 1 mitumhaust wird. Entsprechend entfällt hier auch die Notwendigkeit eines dritten Antriebsanschlusses 2c. Vielmehr ist die erste Hilfsaggregatbaugruppe 10a innerhalb des Achsgehäuses 1 über eine starre Welle direkt mit der ersten Drehmoment-Übertragungseinrichtung 6a verbunden. Die Ausführung der ersten Drehmoment-Übertragungseinrichtung 6a selbst sowie die Art und Weise der Kupplung entsprechen dabei weiterhin der im Detail in Figur 2 beschriebenen Variante. Ausführungsform D stellt eine Abwandlung der eben beschriebenen Ausführungsform C dar, bei der die erste Übertragungseinrichtung 6a zwei statt nur einer Kupplungen, beispielsweise zwei Klauenkupplungen, umfasst. Dies ermöglicht ein wahlweises Trennen der elektrischen Maschine 4 aus dem Antriebstrang, wodurch, falls der elektrische Antrieb nicht benötigt wird, wiederum weniger Masse bewegt werden muss und damit Energie eingespart werden kann. Ausführungsform E entspricht im Wesentlichen der im Detail Figur 3 dargestellten Ausführungsform, wobei wiederum auf die Darstellung des Getriebes 16, der Antriebsanschlüsse 2a, 2b, 2c sowie der Gelenkwellen verzichtet wurde. Ausführungsform F stellt eine Variation der Ausführungsform E dar, bei der die erste Übertragungseinrichtung 6a zwei Kupplungen umfasst.

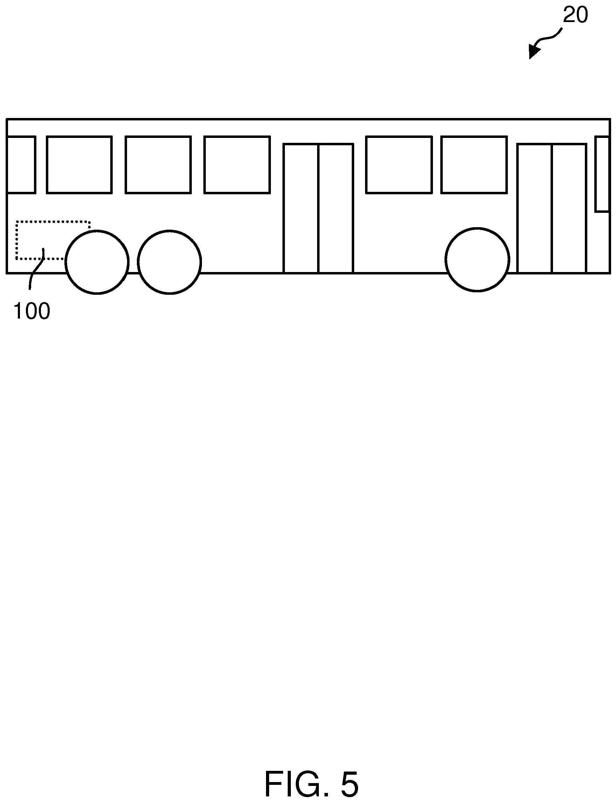

Figur 5 zeigt ein Kraftfahrzeug 20, vorliegend einen Omnibus, mit einer Hybridantriebsvorrichtung 100, wie sie in diesem Dokument beschrieben ist. Durch die vorteilhafte Anordnung der elektrischen Maschine 4 auf einer der Verbrennungsmotor 3 gegenüberliegenden Seite des Achsgehäuses 1 kommen so auf vorteilhafte Weise eine Hybridisierung des Antriebsstrangs erfolgen, wobei der Verbrennungsmotor 3 weiterhin im hinteren Überhang einbaubar ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Achsgehäuse
- 2a: Erster Antriebsanschluss
- 2c: Zweiter Antriebsanschluss
- 2c: Dritter Antriebsanschluss
- 3: Verbrennungsmotor
- 4: Elektrische Maschine
- 5: Differenzial
- 6a: Erste Drehmoment-Übertragungseinrichtung
- 6b: Zweite Drehmoment-Übertragungseinrichtung
- 7a: Erstes Zahnrad
- 7b: Zweites Zahnrad
- 8a: Erste Kupplung
- 8b: Zweite Kupplung
- 9: Durchtrieb
- 10a: Erste Hilfsaggregatbaugruppe
- 10b: Zweite Hilfsaggregatbaugruppe
- 11a: Erstes Hilfsaggregat
- 11b: Zweites Hilfsaggregat
- 12a: Erste Trennkupplung
- 12b: Zweite Trennkupplung
- 12c: Dritte Trennkupplung
- 12d: Vierte Trennkupplung
- 13a: Hilfsaggregatgehäuse
- 13b: Gehäuse
- 14: Übersetzungsgetriebe
- 15a: Erste Antriebsverbindung
- 15b: Zweite Antriebsverbindung
- 16: Getriebe
- 20: Kraftfahrzeug
- 100: Hybridantriebsvorrichtung

## Patentansprüche

1. Hybridantriebsvorrichtung (100) für ein Kraftfahrzeug (20), vorzugsweise für einem Omnibus, umfassend
a) ein Achsgehäuse (1) mit einen ersten und zweiten Antriebsanschluss (2a, 2b),
b) einen Verbrennungsmotor (3), der mit dem ersten Antriebsanschluss (2a) verbindbar ist,
c) eine elektrische Maschine (4), die mit dem zweiten Antriebsanschluss (2b) verbindbar ist,
d) ein im Achsgehäuse (1) angeordnetes Differenzial (5), das mit zwei Achswellen verbunden ist und
**gekennzeichnet durch,** eine im Achsgehäuse (1) angeordnete erste Drehmoment-Übertragungseinrichtung (6a), umfassend eine erste Kupplung (8a), wobei die erste Drehmoment-Übertragungseinrichtung (6a) ausgebildet ist, in einem ersten Betriebsmodus M₁ Drehmoment zwischen dem ersten und/oder zweiten Antriebsanschluss (2a, 2b) und dem Differenzial (5) zu übertragen und in einem zweiten Betriebsmodus M₂ Drehmoment zwischen dem ersten und zweiten Antriebsanschluss (2a, 2b) unter Umgehung des Differenzials (5) zu übertragen, wobei der Elektromotor (4) mit dem zweiten Antriebsanschluss (2b) über eine zweite Antriebsverbindung (15b) verbindbar ist, und wobei die zweite Antriebsverbindung (15b) eine starre Welle, eine Gelenkwelle, eine Kardanwelle und/oder eine fünfte Trenn-kupplung umfasst.

2. Hybridantriebsvorrichtung (100) nach Anspruch 1, **dadurch gekennzeichnet, dass** ein Wechsel zwischen dem ersten und zweiten Betriebsmodus M₁, M₂ durch ein Überführen der ersten Kupplung (8a) von einem geschlossenen in einen offenen Zustand oder umgekehrt erzeugbar ist.

3. Hybridantriebsvorrichtung (100) nach einem der vorherigen Ansprüche, **dadurch gekennzeichnet, dass** die erste Drehmoment-Übertragungseinrichtung (6a) in Form eines Verteilergetriebes aus zwei oder mehr miteinander gepaarten Zahnrädern (7a, 7b) und/oder die erste Kupplung (8a) als Klauenkupplung ausgebildet ist.

4. Hybridantriebsvorrichtung (100) nach einem der vorherigen Ansprüche, **dadurch gekennzeichnet, dass** der erste und zweite Antriebsanschluss (2a, 2b) im Achsgehäuse (1) über
a) einen Durchtrieb (9) in Antriebsverbindung stehen, wobei der Durchtrieb (9) mittels der ersten Kupplung (8a) an die erste Drehmoment-Übertragungseinrichtung (6a) koppelbar ist, oder
b) die erste Drehmoment-Übertragungseinrichtung (6a) in Antriebsverbindung stehen, wobei die erste Drehmoment-Übertragungseinrichtung (6a) mittels der ersten Kupplung (8a) an das Differenzial (5) koppelbar ist.

5. Hybridantriebsvorrichtung (100) nach einem der vorherigen Ansprüche, **dadurch gekennzeichnet, dass** die erste Drehmoment-Übertragungseinrichtung (6a) eine zweite Kupplung (8b) umfasst, durch die der erste oder zweite Antriebsanschluss (2a, 2b) im ersten Betriebsmodus M₁ vom jeweils anderen Antriebsanschluss (2b, 2a) entkoppelbar ist, wobei dies vorzugsweise durch ein Überführen der zweiten Kupplung (8b) von einem geschlossenen in einen offenen Zustand oder umgekehrt erfolgt.

6. Hybridantriebsvorrichtung (100) nach einem der vorherigen Ansprüche, **gekennzeichnet durch** eine erste Hilfsaggregatbaugruppe (10a), umfassend mindestens ein Hilfsaggregat (11a), vorzugsweise einen Luftpresser und/oder einen Klimakompressor, wobei die erste Hilfsaggregatbaugruppe (10a) außerhalb des Achsgehäuses (1) angeordnet ist und mit einem dritten Antriebsanschluss (2c) des Achsgehäuse (1), vorzugsweise über eine starre Welle, eine Gelenkwelle und/oder eine Kardanwelle, verbindbar ist.

7. Hybridantriebsvorrichtung (100) nach Anspruch 6, **dadurch gekennzeichnet, dass** die erste Drehmoment-Übertragungseinrichtung (6a) ausgebildet ist, im ersten Betriebsmodus M, Drehmoment zwischen dem dritten Antriebsanschluss (2c) und dem Differenzial (5) zu übertragen und in dem zweiten Betriebsmodus M₂ Drehmoment zwischen dem ersten, zweiten und dritten Antriebsanschluss (2a, 2b, 2c) unter Umgehung des Differenzials (5) zu übertragen, wobei vorzugsweise ein Wechsel zwischen dem ersten und zweiten Betriebsmodus M₁, M₂ durch ein Überführen der ersten Kupplung (8a) von einem geschlossenen in einen offenen Zustand oder umgekehrt erzeugbar ist.

8. Hybridantriebsvorrichtung (100) nach einem der Ansprüche 6 oder 7, **dadurch gekennzeichnet, dass** die erste Hilfsaggregatbaugruppe (10a) folgende Merkmale umfasst:
- zwei Hilfsaggregate (11a, 11b), vorzugsweise einen Luftpresser und einen Klimakompressor;
- eine zweite Drehmoment-Übertragungseichrichtung (6b) zur antriebsmäßigen Kopplung der zwei Hilfsaggregate (11a, 11b); und
- zwei Trennkupplungen (12a, 12b), die jeweils zur wahlweisen Unterbrechung des Drehmomentflusses zwischen der zweiten Drehmoment-Übertragungseichrichtung (6b) und dem jeweiligen Hilfsaggregat (11a, 11b) angeordnet sind.

9. Hybridantriebsvorrichtung (100) nach einem der vorherigen Ansprüche, **gekennzeichnet durch** eine zweite Hilfsaggregatbaugruppe (10b), umfassend mindestens ein Hilfsaggregat (1 1a), vorzugsweise einen Luftpresser und/oder einen Klimakompressor, wobei zweite Hilfsaggregatbaugruppe (10b) zusammen mit der elektrischen Maschine (4) außerhalb des Achsgehäuses (1) angeordnet ist und mit dem zweiten Antriebsanschluss (2b) verbindbar ist.

10. Hybridantriebsvorrichtung (100) nach Anspruch 9, **dadurch gekennzeichnet, dass** die zweite Hilfsaggregatbaugruppe (10b) folgende Merkmale umfasst:
- zwei Hilfsaggregate (11a, 11b), vorzugsweise einen Luftpresser und einen Klimakompressor;
- eine dritte Drehmoment-Übertragungseichrichtung (6c) zur antriebsmäßigen Kopplung der zwei Hilfsaggregate (11a, 11b) und der elektrischen Maschine (4); und
- drei Trennkupplungen (12a, 12b, 12c), die jeweils zur wahlweisen Unterbrechung des Drehmomentflusses zwischen der dritten Drehmoment-Übertragungseichrichtung (6c) und dem jeweiligen Hilfsaggregat (11a, 11b) und der elektrischen Maschine (4) angeordnet sind.

11. Hybridantriebsvorrichtung (100) nach einem der Ansprüche 9 oder 10, **dadurch gekennzeichnet, dass** die zweite Hilfsaggregatbaugruppe (10b) und die elektrische Maschine (4) von einem gemeinsamen Gehäuse (13b) umhaust werden.

12. Hybridantriebsvorrichtung (100) nach einem der Ansprüche 9 oder 11, **dadurch gekennzeichnet, dass** der elektrischen Maschine (4) ein Übersetzungsgetriebe (14) mit mindestens einer Übersetzungsstufe vorgeschaltet ist.

13. Hybridantriebsvorrichtung (100) nach einem der vorherigen Ansprüche, **dadurch gekennzeichnet, dass**
a) die elektrische Maschine (4) auf einer gegenüberliegenden Seite des Achsgehäuses (1) wie der Verbrennungsmotor (3) angeordnet ist, und/oder
b) die elektrische Maschine (4) in normaler Vorwärts-Fahrtrichtung vor dem Achsgehäuse (1) und der Verbrennungsmotor (3) hinter dem Achsgehäuse (1) angeordnet ist.

14. Hybridantriebsvorrichtung (100) nach einem der vorherigen Ansprüche, **dadurch gekennzeichnet, dass**
a) der Verbrennungsmotor (3) mit dem ersten Antriebsanschluss (2a) über eine erste Antriebsverbindung (15a) verbindbar ist, wobei die erste Antriebsverbindung (15a) eine starre Welle, eine Gelenkwelle, eine Kardanwelle, und/oder eine vierte Trennkupplung (12d) umfasst.

15. Kraftfahrzeug (20), vorzugsweise Omnibus, umfassend eine Hybridantriebsvorrichtung (100) nach einem der vorherigen Ansprüche.

## Claims

1. A hybrid drive device (100) for a motor vehicle (20), preferably for a bus, comprising
a) an axle housing (1) with a first and second drive connection (2a, 2b),
b) an internal combustion engine (3) connectable to the first drive connection (2a),
c) an electric machine (4) connectable to the second drive connection (2b),
d) a differential (5) arranged in the axle housing (1), connected to two axle shafts and **characterised by** a first torque transmission device (6a) arranged in the axle housing (1), comprising a first clutch (8a), wherein the first torque transmission device (6a) is configured to transmit torque between the first and/or second drive connection (2a, 2b) and the differential (5) in a first operating mode M₁ and to transmit torque between the first and second drive connection (2a, 2b) bypassing the differential (5) in a second operating mode M₂, wherein the electric motor (4) is connectable to the second drive connection (2b) via a second drive connection (15b), and wherein the second drive connection (15b) comprises a rigid shaft, a joint shaft, a cardan shaft and/or a fifth separating clutch.

2. The hybrid drive device (100) according to claim 1, **characterised in that** a change between the first and second operating modes M₁, M₂ is achievable by transferring the first clutch (8a) from a closed to an open state or vice versa.

3. The hybrid drive device (100) according to one of the preceding claims, **characterised in that** the first torque transmission device (6a) is configured as a transfer gear comprising two or more gears (7a, 7b) paired with one another and/or the first clutch (8a) is configured as a claw clutch.

4. The hybrid drive device (100) according to one of the preceding claims, **characterised in that** the first and second drive connection (2a, 2b) are in drive connection in the axle housing (1) via
a) a through-drive (9), wherein the through-drive (9) can be coupled to the first torque transmission device (6a) by means of the first clutch (8a), or
b) the first torque transmission device (6a), wherein the first torque transmission device (6a) can be coupled to the differential (5) by means of the first clutch (8a).

5. The hybrid drive device (100) according to one of the previous claims, **characterised in that** the first torque transmission device (6a) comprises a second clutch (8b), by which the first or second drive connection (2a, 2b) can be decoupled from the respective other drive connection (2b, 2a) in the first operating mode M₁, wherein this is preferably achieved by transferring the second clutch (8b) from a closed to an open state or vice versa.

6. The hybrid drive device (100) according to one of the preceding claims, **characterised by** a first auxiliary unit assembly (10a), comprising at least one auxiliary unit (11a), preferably an air compressor and/or an air conditioning compressor, wherein the first auxiliary unit assembly (10a) is arranged outside the axle housing (1) and is connectable to a third drive connection (2c) of the axle housing (1), preferably via a rigid shaft, a joint shaft and/or a cardan shaft.

7. The hybrid drive device (100) according to claim 6, **characterised in that** the first torque transmission device (6a) is configured to transmit torque between the third drive connection (2c) and the differential (5) in the first operating mode Mi and to transmit torque between the first, second and third drive connections (2a, 2b, 2c) bypassing the differential (5), in the second operating mode M₂, wherein preferably a change between the first and second operating modes M₁, M₂ is achievable by transferring the first clutch (8a) from a closed to an open state or vice versa.

8. The hybrid drive device (100) according to one of claims 6 or 7, **characterised in that** the first auxiliary unit assembly (10a) comprises the following features:
- two auxiliary units (11a, 11b), preferably an air compressor and an air conditioning compressor;
- a second torque transmission device (6b) for drivingly coupling the two auxiliary units (11a, 11b); and
- two separating clutches (12a, 12b), each arranged for selectively interrupting the torque flow between the second torque transmission device (6b) and the respective auxiliary unit (11a, 11b).

9. The hybrid drive device (100) according to one of the preceding claims, **characterised by** a second auxiliary unit assembly (10b), comprising at least one auxiliary unit (11a), preferably an air compressor and/or an air conditioning compressor, wherein the second auxiliary unit assembly (10b) is arranged together with the electric machine (4) outside the axle housing (1) and is connectable to the second drive connection (2b).

10. The hybrid drive device (100) according to claim 9, **characterised in that** the second auxiliary unit assembly (10b) comprises the following features:
- two auxiliary units (11a, 11b), preferably an air compressor and an air conditioning compressor;
- a third torque transmission device (6c) for drivingly coupling the two auxiliary units (11a, 11b) and the electric machine (4); and
- three separating clutches (12a, 12b, 12c), which are each arranged for selectively interrupting the torque flow between the third torque transmission direction (6c) and the respective auxiliary unit (11a, 11b) and the electric machine (4).

11. The hybrid drive device (100) according to one of claims 9 or 10, **characterised in that** the second auxiliary unit assembly (10b) and the electric machine (4) are enclosed by a common housing (13b).

12. The hybrid drive device (100) according to one of claims 9 or 11, **characterised in that** a transmission gear (14) with at least one transmission ratio stage is connected upstream of the electric machine (4).

13. The hybrid drive device (100) according to one of the preceding claims, **characterised in that**
a) the electric machine (4) is arranged on an opposite side of the axle housing (1) as the internal combustion engine (3), and/or
b) the electric machine (4) is arranged in front of the axle housing (1) in the normal forward direction of travel and the internal combustion engine (3) is arranged behind the axle housing (1).

14. The hybrid drive device (100) according to one of the preceding claims, **characterised in that**
a) the internal combustion engine (3) can be connected to the first drive connection (2a) via a first drive connection (15a), wherein the first drive connection (15a) comprises a rigid shaft, a joint shaft, a cardan shaft, and/or a fourth separating clutch (12d).

15. A motor vehicle (20), preferably a bus, comprising a hybrid drive device (100) according to one of the preceding claims.

## Revendications

1. Dispositif d'entraînement hybride (100) destiné à un véhicule automobile (20), de préférence un autobus, ledit dispositif comprenant
a) un carter d'essieu (1) pourvu d'un premier et d'un deuxième raccord d'entraînement (2a, 2b),
b) un moteur à combustion interne (3) qui peut être relié au premier raccord d'entraînement (2a),
c) une machine électrique (4) qui peut être reliée au deuxième raccord d'entraînement (2b),
d) un différentiel (5) qui est disposé dans le carter d'essieu (1) et qui est relié à deux arbres d'essieu et
**caractérisé par** un premier module de transmission de couple (6a) disposé dans le carter d'essieu (1) et comprenant un premier embrayage (8a), le premier module de transmission de couple (6a) étant conçu pour transmettre un couple entre le premier et/ou le deuxième raccord d'entraînement (2a, 2b) et le différentiel (5) dans un premier mode de fonctionnement M₁ et un couple entre le premier et le deuxième raccord d'entraînement (2a, 2b) en contournant le différentiel (5) dans un deuxième mode de fonctionnement M₂, le moteur électrique (4) pouvant être relié au deuxième raccord d'entraînement (2b) par le biais d'une deuxième liaison d'entraînement (15b), et la deuxième liaison d'entraînement (15b) comprenant un arbre rigide, un arbre articulé, un arbre à cardan et/ou un cinquième embrayage de séparation.

2. Dispositif d'entraînement hybride (100) selon la revendication 1, **caractérisé en ce qu'**un passage entre les premier et deuxième modes de fonctionnement M₁, M₂ peut être réalisé par transfert du premier embrayage (8a) d'un état fermé à un état ouvert ou inversement.

3. Dispositif d'entraînement hybride (100) selon l'une des revendications précédentes, **caractérisé en ce que** le premier module de transmission de couple (6a) est conçu sous la forme d'une boîte de transfert comprenant deux roues dentées (7a, 7b) ou plus appariées l'une à l'autre et/ou le premier embrayage (8a) est conçu comme un crabotage.

4. Dispositif d'entraînement hybride (100) selon l'une des revendications précédentes, **caractérisé en ce que**, dans le carter d'essieu (1), le premier et le deuxième raccord d'entraînement (2a, 2b)
a) sont en liaison d'entraînement par le biais d'un entraînement direct (9), l'entraînement direct (9) pouvant être accouplé au premier module de transmission de couple (6a) à l'aide du premier embrayage (8a), ou
b) sont en liaison d'entraînement par le biais du premier module de transmission de couple (6a), le premier module de transmission de couple (6a) pouvant être accouplé au différentiel (5) à l'aide du premier embrayage (8a).

5. Dispositif d'entraînement hybride (100) selon l'une des revendications précédentes, **caractérisé en ce que** le premier module de transmission de couple (6a) comprend un deuxième embrayage (8b) qui permet de désaccoupler le premier ou le deuxième raccord d'entraînement (2a, 2b) de l'autre raccord d'entraînement respectif (2b, 2a) dans le premier mode de fonctionnement M₁, cela étant réalisé de préférence par transfert du deuxième embrayage (8b) d'un état fermé à un état ouvert ou inversement.

6. Dispositif d'entraînement hybride (100) selon l'une des revendications précédentes, **caractérisé par** un premier ensemble d'unités auxiliaires (10a) comprenant au moins une unité auxiliaire (11a), de préférence un compresseur d'air et/ou un compresseur de climatisation, le premier ensemble d'unités auxiliaires (10a) étant disposé à l'extérieur du carter d'essieu (1) et pouvant être relié à un troisième raccord d'entraînement (2c) du carter d'essieu (1), de préférence par le biais d'un arbre rigide, d'un arbre articulé et/ou d'un arbre à cardan.

7. Dispositif d'entraînement hybride (100) selon la revendication 6, **caractérisé en ce que** le premier module de transmission de couple (6a) est conçu pour transmettre un couple entre le troisième raccord d'entraînement (2c) et le différentiel (5) dans le premier mode de fonctionnement M₁ et pour transmettre un couple entre les premier, deuxième et troisième raccords d'entraînement (2a, 2b, 2c) en contournant le différentiel (5) dans le deuxième mode de fonctionnement M₂, un passage entre les premier et deuxième modes de fonctionnement M₁, M₂ pouvant de préférence être réalisé par transfert du premier embrayage (8a) d'un état fermé à un état ouvert ou inversement.

8. Dispositif d'entraînement hybride (100) selon l'une des revendications 6 ou 7, **caractérisé en ce que** le premier ensemble d'unités auxiliaires (10a) comprend les caractéristiques suivantes :
- deux unités auxiliaires (11a, 11b), de préférence un compresseur d'air et un compresseur de climatisation ;
- un deuxième module de transmission de couple (6b) destiné à accoupler en entraînement les deux unités auxiliaires (11a, 11b) ; et
- deux embrayages de séparation (12a, 12b) qui sont chacun disposés de façon à interrompre sélectivement le flux de couple entre le deuxième module de transmission de couple (6b) et l'unité auxiliaire respective (11a, 11b) .

9. Dispositif d'entraînement hybride (100) selon l'une des revendications précédentes, **caractérisé par** un deuxième ensemble d'unités auxiliaires (10b) comprenant au moins une unité auxiliaire (11a), de préférence un compresseur d'air et/ou un compresseur de climatisation, le deuxième ensemble d'unités auxiliaires (10b) étant disposé conjointement avec la machine électrique (4) à l'extérieur du carter d'essieu (1) et pouvant être relié au deuxième raccord d'entraînement (2b).

10. Dispositif d'entraînement hybride (100) selon la revendication 9, **caractérisé en ce que** le deuxième ensemble d'unités auxiliaires (10b) comprend les caractéristiques suivantes :
- deux unités auxiliaires (11a, 11b), de préférence un compresseur d'air et un compresseur de climatisation ;
- un troisième module de transmission de couple (6c) destiné à accoupler en entraînement les deux unités auxiliaires (11a, 11b) et la machine électrique (4) ; et
- trois embrayages de séparation (12a, 12b, 12c) qui sont chacun disposés de façon à interrompre sélectivement le flux de couple entre le troisième module de transmission de couple (6c) et l'unité auxiliaire respective (11a, 11b) et la machine électrique (4).

11. Dispositif d'entraînement hybride (100) selon l'une des revendications 9 ou 10, **caractérisé en ce que** le deuxième ensemble d'unités auxiliaires (10b) et la machine électrique (4) sont enfermés par un boîtier commun (13b).

12. Dispositif d'entraînement hybride (100) selon l'une des revendications 9 ou 11, **caractérisé en ce qu'**une transmission à engrenages (14) pourvue d'au moins un étage d'engrenages est montée en amont de la machine électrique (4).

13. Dispositif d'entraînement hybride (100) selon l'une des revendications précédentes, **caractérisé en ce que**
a) la machine électrique (4) est disposée sur un côté opposé du carter d'essieu (1) comme le moteur à combustion interne (3), et/ou
b) la machine électrique (4) est disposée avant le carter d'essieu (1), et le moteur à combustion interne (3) est disposé derrière le carter d'essieu (1), dans le sens d'avancement normal.

14. Dispositif d'entraînement hybride (100) selon l'une des revendications précédentes, **caractérisé en ce que**
a) le moteur à combustion interne (3) peut être relié au premier raccord d'entraînement (2a) par le biais d'une première liaison d'entraînement (15a), la première liaison d'entraînement (15a) comprenant un arbre rigide, un arbre articulé, un arbre à cardan et/ou un quatrième embrayage de séparation (12d).

15. Véhicule automobile (20), de préférence un autobus, comprenant un dispositif d'entraînement hybride (100) selon l'une des revendications précédentes.
